# EUROPEAN PATENT APPLICATION

(11) **EP 4 782 677 A1**
(43) Date of publication of application: **29.07.2026**
(21) Application number: 26153514.0
(22) Date of filing: 22.01.2026
(51) Int. Cl.: F02K 3/06, B64D 27/40

(54) **MOUNT SYSTEM FOR REVERSE CORE ENGINE**

(30) Priority: 22.01.2025 US 202519034118
(71) Applicant: RTX Corporation, Farmington, CT 06032 (US)
(72) Inventor: MORTON, Jeffrey T., Farmington, 06032 (US); BREAULT, Andrew E., Farmington, 06032 (US)
(74) Representative: Dehns

(57) **Abstract**

An aircraft propulsion system (20), a propulsor section (22) and a core engine section (24) configured to generate an exhaust gas flow (58) that is expanded through a turbine (34) to drive a shaft (36) for driving the fan (26). A propulsor mount assembly (64) is attached to the propulsor section (22) and supports the propulsor section (22) on an aircraft structure and isolates loads generated in the propulsor section (22) from the core engine section (24).

## Description

### TECHNICAL FIELD

The present invention relates generally to a mount assembly where loads encountered by a propulsor section are isolated from a core engine section.

### BACKGROUND

A gas turbine engine typically includes a propulsor with a fan and a core engine that includes a compressor section, a combustor section, and a turbine section. Rotating blades within the compressor and turbine sections are designed and configured to provide clearances between static case structures. Maintaining the clearances within defined limits maintains operation of the engine within desired performance parameters. A propulsor section of an engine is susceptible to significant loading and is a major contributor to bending forces exerted on engine components. The engine is configured to account for forces exerted during flight operation. Such forces may cause bending that is factored into the defined clearances. Smaller clearances provide increased performance and engine efficiency. However, the size of clearances must account for bending during operation. Accordingly, any reduction in bending forces exerted on the engine provides for a reduction in clearances and thereby, increased engine performance.

Turbine engine manufacturers continue to seek further improvements to engine performance including improvements to thermal, transfer and propulsive efficiencies.

### SUMMARY

According to one aspect of the present invention, there is provided an aircraft propulsion system including, among other possible things, a propulsor section comprising a fan rotatable about a fan axis, a core engine section configured to generate an exhaust gas flow that is expanded through a turbine to drive a shaft for driving the fan, and a propulsor mount assembly attached to the propulsor section that supports the propulsor section on an aircraft structure and isolates loads generated in the propulsor section from the core engine section.

Optionally, and in accordance with the above, the turbine comprises a power turbine mechanically uncoupled from the core engine and configured to drive the fan about the fan axis through a power turbine shaft.

Optionally, and in accordance with any of the above, the aircraft propulsion systems includes a structural transition duct where the exhaust gas flow from the core engine is communicated to the power turbine, the structural transition duct is supported by the propulsor mount assembly and the core engine is attached to the structural transition duct.

Optionally, and in accordance with any of the above, the propulsor mount assembly comprises a forward portion attached to the propulsor section, an aft portion attached to the structural transition duct, and a thrust link attached to the propulsor section.

Optionally, and in accordance with any of the above, the core engine section is mounted to an aft portion of the propulsor section.

Optionally, and in accordance with any of the above, the aircraft propulsion systems, further includes a compliant transition duct disposed between the propulsor section and the core engine section, and a core engine mount assembly attached to the core engine section that supports loads of the core engine separate from the propulsor section.

Optionally, and in accordance with any of the above, the propulsor mount section comprises a forward portion attached to a forward location of the propulsor section, an aft portion attached to an aft location of the propulsor section, and a thrust link attached near the forward location.

Optionally, and in accordance with any of the above, the core engine section comprises a reverse core engine with a turbine section disposed forward of compressor section and the core engine mount assembly comprises a forward mount, an aft mount and an engine thrust link extending from a forward location of the aircraft structure to an aft portion of an engine case of the core engine.

Optionally, and in accordance with any of the above, the compliant transition duct is configured to prevent transmission of loads between the propulsor section and the core engine section.

Optionally, and in accordance with any of the above, the fan comprises an open rotor fan assembly.

Optionally, and in accordance with any of the above, the propulsor section includes a fan duct and the fan rotates within the fan duct.

Optionally, and in accordance with any of the above, the core engine section is disposed about an engine axis and the engine axis is disposed at an angle relative to the fan axis.

Optionally, and in accordance with any of the above, the core engine is removable from the aircraft structure independent of the propulsor section.

Optionally, and in accordance with any of the above, the propulsor section includes a structural case, the core engine section is supported by the structural case and the turbine section is a part of the core engine section.

According to another aspect of the present invention, there is provided a gas turbine engine assembly including, among other possible things, a propulsor section comprising a fan rotatable about a fan axis, a power turbine configured to drive the fan, a core engine section comprising a turbine section forward of a compressor section, the core engine configured to generate an exhaust gas flow from a mixture of fuel and air in a combustor section for expansion through the power turbine, wherein the core engine is mechanically uncoupled from the propulsor section, a transition duct where exhaust gas flow generated by the core engine section is communicated to the power turbine, and a propulsor mount assembly attached to the propulsor section that supports the propulsor section on an aircraft structure independent of the core engine section for isolating loads generated in the propulsor section from the core engine section.

Optionally, and in accordance with any of the above, the transition duct comprises a structural duct supported by the propulsor mount assembly and the core engine is attached to the structural transition duct.

Optionally, and in accordance with any of the above, the transition duct comprises a compliant duct disposed between the propulsor section and the core engine section and configured to isolate transmission of loads from the propulsor section to the core engine section, and further comprising a core engine mount assembly attached to the core engine section that supports loads of the core engine separate from the propulsor section.

Optionally, and in accordance with any of the above, the propulsor mount section comprises a forward portion attached to a forward location of the propulsor section, an aft portion attached to an aft location of the propulsor section, and a thrust link attached near the forward location.

According to another aspect of the present invention, there is provided a method of mounting an aircraft propulsion system including, among other possible things, mounting a propulsor section comprising a fan rotatable about a fan axis with a propulsor mount assembly, wherein the propulsor mount assembly supports the propulsor section independent of a core engine section, mounting a core engine section configured to generate an exhaust gas flow relative to the propulsor section, and isolating loads generated in the propulsor section from the core engine section with the propulsor mount assembly.

Optionally, and in accordance with any of the above, the method further includes independently mounting the core engine section and mounting a transition duct between the propulsor section and the core engine section where the exhaust gas flow from the core engine section is communicated to a power turbine that drives the fan independent of rotating elements of the core engine section. Although the different examples have the specific components shown in the illustrations, embodiments of this disclosure are not limited to those particular combinations. It is possible to use some of the components or features from one of the examples in combination with features or components from another one of the examples.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example aircraft propulsion system and mount assembly.
Figure 2 is a front schematic view of a portion of a mount assembly embodiment.
Figure 3 is a front schematic view of a portion of another mount assembly embodiment.
Figure 4 is a schematic view of another example aircraft propulsion system and mount assembly.
Figure 5 is a schematic view of a ducted propulsor section embodiment.
Figure 6 is a schematic view of another example aircraft propulsion system and mount assembly.
Figure 7 is a schematic view of yet another example aircraft propulsion system and mount assembly.
Figure 8 is a schematic view of still another example aircraft propulsion system and mount assembly.

### DETAILED DESCRIPTION

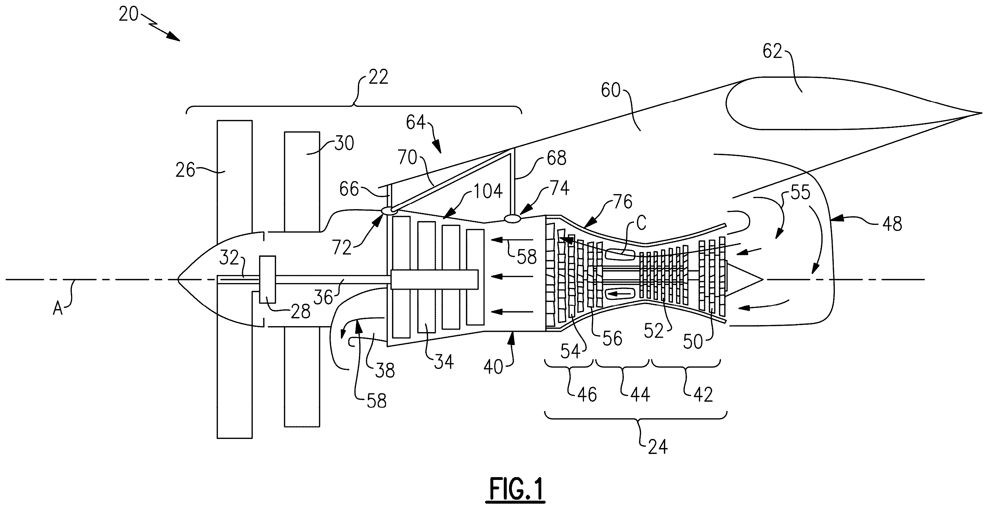

Figure 1 schematically illustrates an aircraft propulsion system 20 that includes a mount assembly 64 where loads encountered by a propulsor section 22 are isolated from a core engine section 24. Isolating the core engine section 24 from loads generated in the propulsor section 22 provides for a reduction in bending and other dynamic deformation in structures of the core engine section 24. The reduction in dynamically induced deformations in the core engine provides for the implementation of reduced clearances and other advantageous configurations that improve power output and efficiency of the core engine section 24.

The example core engine section 24 is of a reverse core configuration that includes a compressor section 42 disposed aft of a combustor section 44 and a turbine section 46. Inlet airflow 55 is directed through inlet duct 48 forward into the compressor section 42. The compressor section 42 drives air along a core flow path C into the combustor section 44 where the compressed air is mixed with fuel and burned to generate an exhaust gas flow 58 that expands through the turbine section 46 and is directed through a transition duct 40 to a power turbine 34. Exhaust gas flow 58 from the power turbine 34 is exhausted radially outward and rearward through an exhaust duct 38.

The example propulsion system 20 is an example of a three spool propulsion system with a two-spool core gas turbine engine 24 that includes a low pressure compressor 50 driven by a low pressure turbine 54 and a high pressure compressor 52 driven by a high pressure turbine 56. The depicted engine architecture is disclosed as an example embodiment and it should be understood that the concepts described herein are not limited to use with any specific number of spools and the teachings may be applied to other turbine engine architectures.

The power turbine 34 is not mechanically coupled to a shaft of the core engine section 24 and is driven by expansion of the exhaust gas flow 58 communicated forward through the transition duct 40.

The example propulsor section 22 includes a fan 26 that includes a plurality of blades driven about a fan axis A. In the disclosed example shown in Figure 1, the fan 26 and the core engine section 24 are disposed about the same axis A. The power turbine 34 drives a power turbine shaft 36 coupled to a fan shaft 32 through a gearbox 28.

The example propulsor section 22 is disclosed in one example embodiment as an open rotor fan with the fan 26 rotating about the axis A outside of any case or nacelle structure. A swirl recovery vane (SRV) 30 is disposed just aft of the open rotor fan 26. The figures illustrate the features of the example propulsion section 22 schematically and would include additional structures to support operation of the example fan 26 and gearbox 28.

The propulsor section 22 is exposed to asymmetric loading during engine operation. The asymmetric loading dynamically changes with aircraft orientation and changing environmental factors. The dynamic loads generated in the propulsor section 22 are accommodated by the mount assembly 64 instead of being transmitted through structures of the core engine section 24.

The example mount assembly 64 supports the propulsor section 22 independent from the core engine section 24. Loads generated by the propulsor section 22 are transmitted to an aircraft structure without communication through the core engine section 24. The independent and separate mounting of the propulsor section 22 substantially prevents the transmission of the dynamic loads into the core engine section 24.

The example mount assembly 64 includes a forward portion 66, an aft portion 68 and a thrust link 70. The forward portion 66 is attached to the propulsor section 22 at a forward location 72. The aft portion 68 is attached to the transition duct 40 at an aft location 74. The thrust link 70 extends from the forward location 72 aft to accommodate forward directed thrust forces. The example mount assembly 64 is statically determinant such that each portion resolves forces and loads in a defined direction. Statically indeterminant mount structures may also be utilized and are within the contemplation and scope of this disclosure.

The terms "forward" and "aft" are utilized in this disclosure to describe relative positions of structural features with respect to a location within the example propulsion system embodiments. Accordingly, the terms "forward" and "aft" are relative to the structural features of the example propulsion systems.

The power turbine 34 is supported within a power turbine case 104. The example power turbine case 104 is a structural component to which the forward portion 66 of the mount assembly 64 is attached. In one disclosed embodiment, the forward location 72 is at or near a forward part of the power turbine case 104.

The example transition duct 40 is a structural component that is attached to an aft end of the power turbine case 104. In one example embodiment, the aft location 72 is disposed on the transition duct 40. The load of the example propulsor section 22 does not go through any part of the core engine section 24. Moreover, any loads exerted on or generated by the propulsor section 22 are directed to an aircraft mounting structure independent of the core engine section 24.

The example mount assembly 64 is attached to a pylon 60 extending from a wing 62 of an aircraft. Although the example mount assembly 64 is mounted to an aircraft wing 62 through the pylon 60, the mount assembly 64 may be attached to other portions of an aircraft structure and such a mounting is within the contemplation of this disclosure.

In one disclosed example, the core engine section 24 is attached to the transition duct 40 and is not supported by other mount assemblies. The load of the core engine 24 is supported by the transition duct 40 and transmitted to the aircraft structure through the mounting assembly 64. Mounting to the transition duct 40 provides for the core engine section 24 to be removed from the aircraft independent of removal of the propulsor section 22.

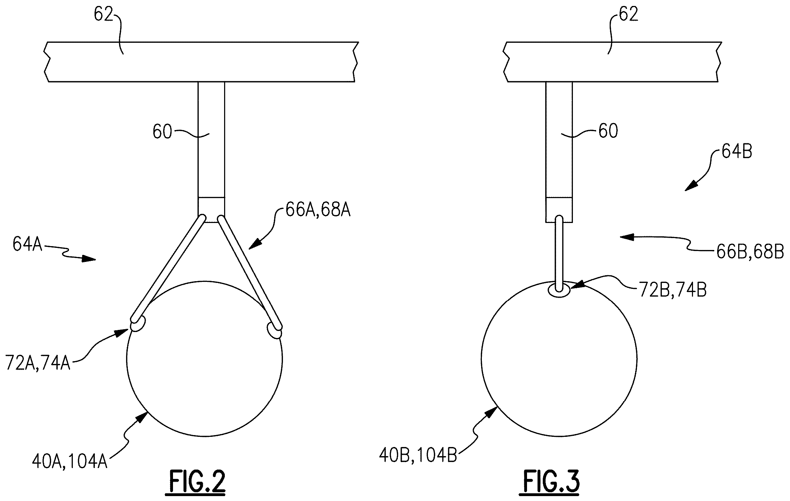

Referring to Figure 2 with continued reference to Figure 1, an example embodiment of a portion of a mount assembly 64A is shown schematically in a front view of the propulsion system 20. Each of the forward portion 66A and the aft portion 68A includes two members that extend to each side at each corresponding axial position of the forward and aft locations 72A, 74A on one of the power turbine case 104A and/or the transition duct 40A. Both the forward portion 66A and the aft portion 68A are mounted at a common location to the pylon 60, in one disclosed embodiment.

Referring to Figure 3, another example embodiment of the example mount assembly 64B is shown where the forward portion 66B and/or the aft portion 68B includes a single member that extends from the pylon 60. The forward portion 66B and the aft portion 68B are attached to a location 72B, 74B at a corresponding one of the power turbine case 104B and/or the transition duct 40B.

Although example structures of the mount assembly 64 are shown and described, other links and connecting structures may be included and are within the contemplation of this disclosure. Each example embodiment provides for the transmission of loads of the propulsor section 22 to the aircraft structure independent from the core engine section 24.

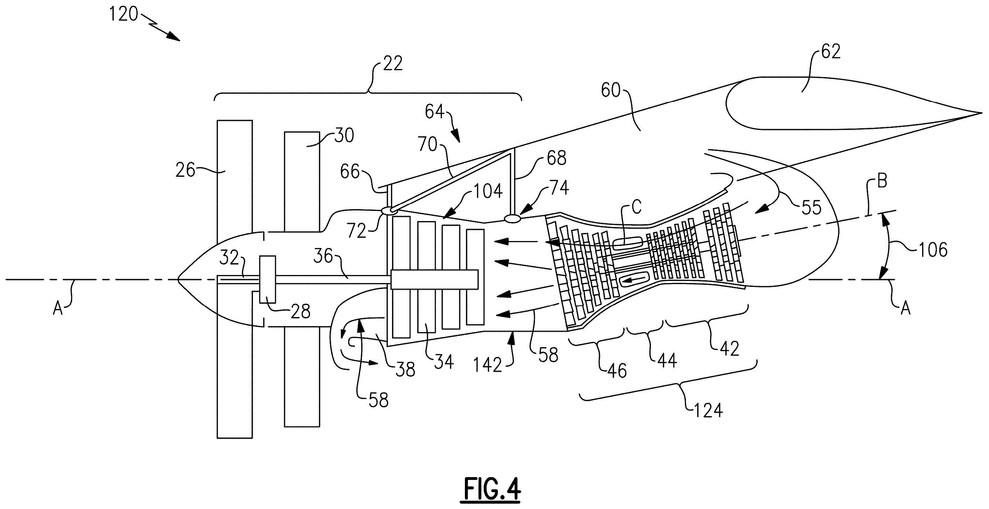

Referring to Figure 4, another propulsion system embodiment is schematically shown and indicated at 120 with a core engine section 124 disposed along a core engine axis B that is disposed at an angle 106 relative to the fan axis A. The propulsor section 22 is supported by the mount assembly 64 as shown and described with regard to the embodiment shown in Figure 1. The example propulsor section 22 is driven by the power turbine shaft 36 of the power turbine 34. The power turbine 34 is driven by an exhaust gas flow 58 and not coupled through a shaft of the core engine section 124. Therefore, the core engine section 124 is not required to be coaxial with the fan axis A. In one example embodiment, the core engine axis B is disposed at the angle 106 from the fan axis A. The angle 106 may be any angle greater than zero and less than about 45 degrees and remain within the contemplation of this disclosure.

Although the example core engine axis B is illustrated as being angled relative to the fan axis A, other offset arrangements could be utilized and are within the scope of this disclosure. For example, the core engine axis B may be parallel to the fan axis A and laterally offset. The mechanical decoupling of the core engine section 124 to the power turbine 34 and propulsor section 22 enables non-aligned orientations between the core engine section 124 and the propulsor section 22. The non-aligned orientations may include angled and/or laterally offset relationships between the core engine section 124 and the propulsor section 22, all of which are within the contemplation and scope of this disclosure.

A transition duct 142 provides a structural component for supporting the core engine section 124 and for communicating exhaust gas flow 58 to the power turbine 34. The example transition duct 142 is shaped and configured to accommodate mounting of the core engine section 124 in the non-aligned manner relative to the propulsor section 22. It should be appreciated that although the example core engine section 124 is shown angled upward relative to the fan axis A and the propulsor section 22, the core engine section 124 may be angled sideways, downward, offset laterally or at another orientation and remain within the contemplation of this disclosure.

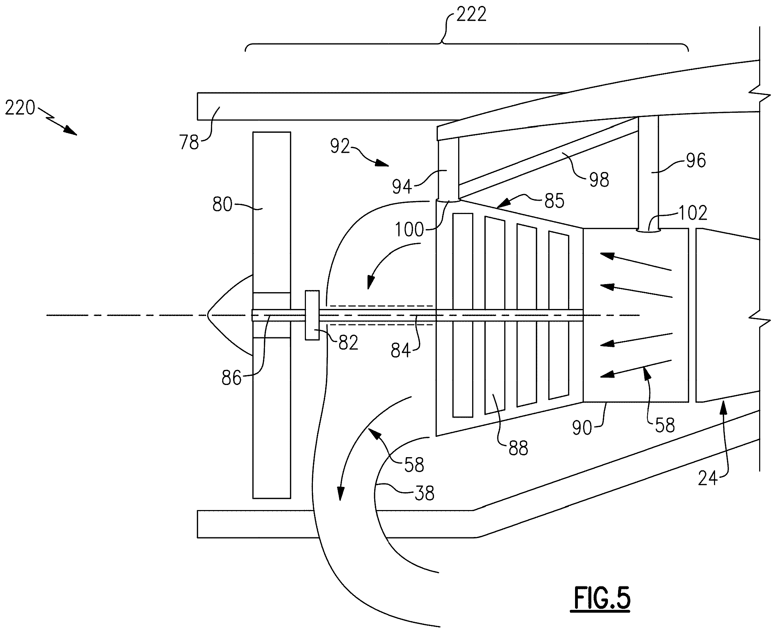

Referring to Figure 5, an example aircraft propulsion system 220 including a ducted propulsor section 222 is schematically shown and includes a fan 80 disposed within a fan duct 78 rather than as an open rotor as shown in previous Figures. An example mount assembly 92 includes a forward portion 94 attached at a forward location 100 of a power turbine case 85. The mount assembly 92 includes an aft portion 96 attached to a transition duct 90 at an aft location 102. A thrust link 98 is attached to the turbine case 85 at or near the forward location 100. The power turbine 88 drives a gear system 82 through a power turbine shaft 84. The gear system 82 drives a fan shaft 86 to drive the fan 80. The core engine section 24 is mounted to the transition duct 90.

The example mount assembly 92 provides for the transmission of loads from the propulsor section 222 to the aircraft structure separate and independent of the core engine section 24. Loads encountered by the propulsor section 222 are therefore not transmitted to or through the core engine section 24.

The example fan duct 78 is shown schematically and may be part of a nacelle or cowling structure defined by the aircraft structure. The exhaust duct 38 may either mix the exhaust gas with a bypass stream or discharge the exhaust gas flow 58 outside of the bypass stream into the ambient environment. The exhaust duct 38 is configured to shield the power turbine shaft 84 and gearbox 82 from the exhaust gas flow 58.

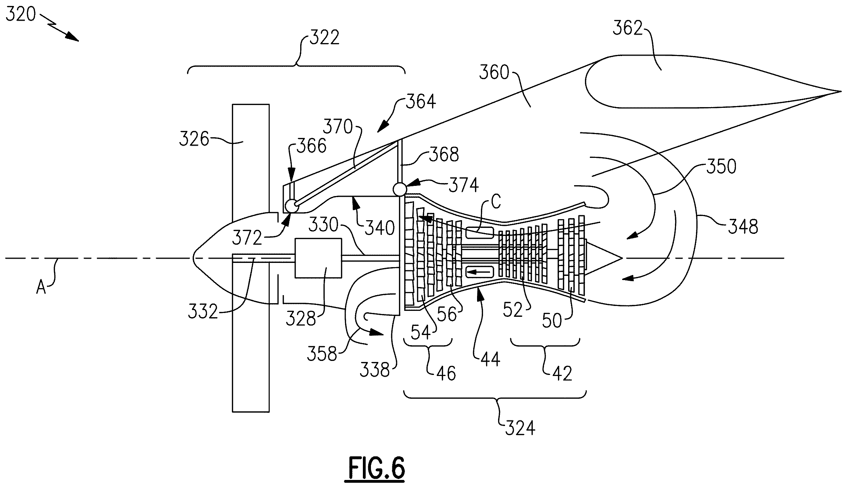

Referring to Figure 6, another example propulsion system 320 is schematically shown and includes propulsor section 322 that is directly driven by a core engine section 324. The example core engine section 324 is a reverse core engine as shown and described in previous figures. The example core engine section 324 includes a turbine section 46 with a low pressure turbine 54 and a high pressure turbine 56. The core engine section 324 further includes a combustor section 44 and a compressor section 42. The compressor section 42 includes a low pressure compressor 50 and a high pressure compressor 52. Inlet airflow 350 is communicated to the compressor section 42 through an inlet duct 348 disposed at an aft portion of the core engine section 324. Exhaust flow 358 is exhausted through a forward duct 338 that directs flow from the turbine section 46 radially outward and rearward.

The propulsor section 322 includes a fan 326 that is rotatable about a fan axis A. Both the core engine section 324 and the fan 326 are disposed about the fan axis A. A drive shaft 330 from the core engine section 324 drives the fan 326 through a gearbox 328. In one example embodiment, the drive shaft 330 is driven by a low pressure turbine 54 of the core engine section 324. In one example embodiment, the drive shaft 330 drives the gearbox 328 that provides a gear reduction to drive a fan shaft 332 that drives the fan 326.

The propulsor section 322 includes a propulsor case 340 that is configured as a structural component. A mount assembly 364 supports the propulsor section 322 independent of the core engine section 324. The example mount assembly 364 includes a forward portion 366 at a forward location 372 of the propulsor case 340 and an aft portion 368 attached to the propulsor case 340 at an aft location 374. Both the forward location 372 and the aft location 374 are on the propulsor case 340 such that propulsor section 322 loads are not transmitted through any portion of the core engine section 324. A thrust link 370 is attached near the forward location 372 to accommodate forward directed thrust forces generated by the fan 326.

The example mount assembly 364 is shown mounted to a pylon 360 disposed on a wing 362 of an aircraft. The example mount assembly 364 may be utilized at other locations in an aircraft, such as on the fuselage, and are within the contemplation and scope of this disclosure.

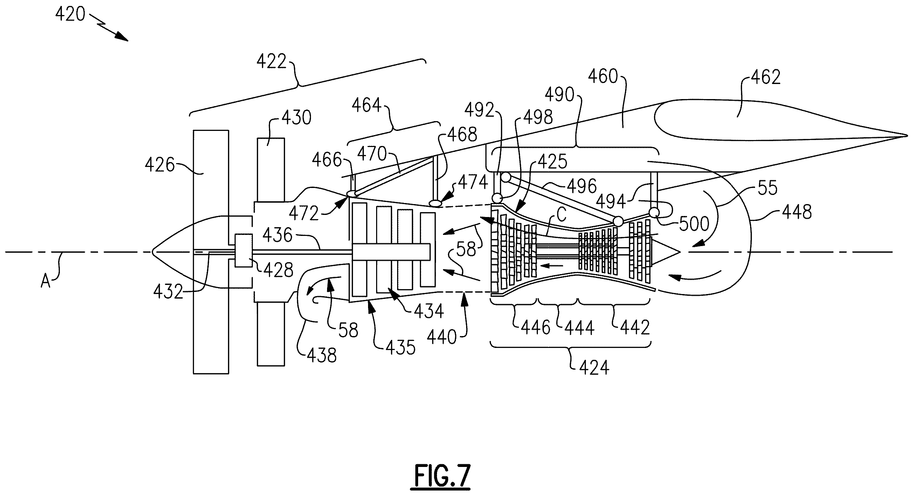

Referring to Figure 7, another example propulsion system is schematically shown and indicated at 420 and includes a compliant transition duct 440 that extends between an independently mounted propulsor section 422 and an independently mounted core engine section 424. A propulsor mount assembly 464 supports the propulsor section 422 and a separate core engine mount assembly 490 supports the core engine section 424.

The example core engine section 424 is a reverse core engine that includes a compressor section 442 that compresses an inlet airflow 55 from an aft inlet duct 448. The compressed airflow 55 is mixed with fuel and ignited in a combustor section 444 to generate an exhaust gas flow 58 that expands through a turbine section 446. The exhaust gas flow 58 is communicated forward to a power turbine 434 disposed within a power turbine case 435 through a compliant transition duct 440. Exhaust gases exhausted from the power turbine 434 are directed radially outward and rearward through an exhaust duct 438.

The power turbine 434 drives a power turbine shaft 436 that drives a fan shaft 432 through a gearbox 428. The example gearbox 428 provides a gear reduction such that the fan 426 rotates at a speed different than the power turbine 434. It should be appreciated, that the fan 426 may be directly driven by the power turbine 434 and remain within the contemplation and scope of this application.

The example propulsor section 422 includes an open rotor fan 426 and a swirl recovery vane 430. Other propulsive fan configurations could be utilized within the contemplation of this disclosure including counterrotating fans, and ducted fan configurations.

The example propulsor mount assembly 464 includes a forward portion 466 attached to the power turbine case 435 at a forward location 472 and an aft portion 468 attached to the power turbine case 435 at an aft location 474. A thrust link 470 is attached between the pylon 460 and the power turbine case 435. The thrust link 470 is attached to the power turbine case 435 at or near the forward location 472.

The example core engine mount assembly 490 includes a forward mount 492 attached to an engine case 425 at a forward location 498 and an aft mount 494 attached at an aft location 500 of the engine case 425. A thrust link 496 is attached to the engine case 425 near the aft location 500. The engine case 425 may be one part or multiple parts attached to each other to support components of the core engine section 424.

The loads generated by the propulsor section 422 are isolated from the core engine section 424 by the separate mount assemblies 464, 490. The transition duct 440 is formed as a compliant structure that does not transmit loads between the core engine section 424 and the propulsor section 422. The example transition duct 440 is not a structural component and does not bear loads of either the propulsor section 422 or the core engine section 424.

In one disclosed embodiment, the mount assemblies 464 and 490 are supported on a pylon 460 extending from a wing 462 of the aircraft. However, other mounting locations on an aircraft structure could be utilized and are within the contemplation of this disclosures.

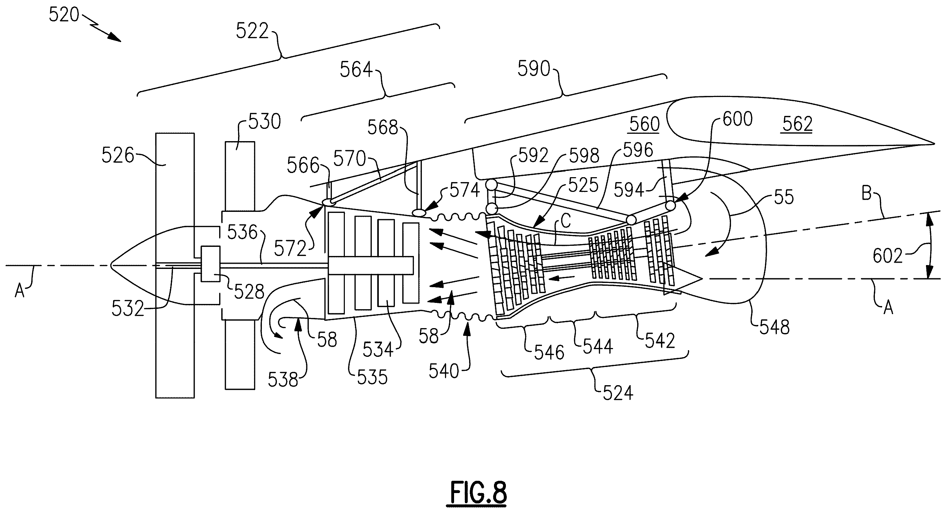

Referring to Figure 8, another aircraft propulsion system is schematically indicated at 520 and includes a core engine section 524 independently mounted along an axis separate from the axis of a propulsor section 522.

The example propulsor section 522 includes an open rotor fan 526 and a swirl recovery vane 530. Other propulsive fan configurations could be utilized within the contemplation of this disclosure including counterrotating fans, and ducted fan configurations.

The example core engine section 524 is a reverse core engine that is mounted along an engine axis B. The engine axis B is disposed at an angle 602 relative to a fan axis A. A compliant transition duct 540 is provided to communicate exhaust gas flow to the power turbine 534 and to isolate the propulsor section 522 and the core engine section 524 from each other.

The example core engine section 524 is a reverse core engine that includes a compressor section 542 that compresses an inlet airflow 55 from an aft inlet duct 548. The compressed airflow is mixed with fuel and ignited in a combustor section 544 to generate an exhaust gas flow 58 that expands through a turbine section 546. The exhaust gas flow 58 is communicated forward to a power turbine 534 through the compliant transition duct 540. Exhaust gases exhausted from the power turbine 534 are directed radially outward and rearward through an exhaust duct 538.

The power turbine 534 drives a power turbine shaft 536 that drives a fan shaft 532 through a gearbox 528. The example gearbox 528 provides a gear reduction such that the fan 526 rotates at a speed different than the power turbine 534. It should be appreciated, that the fan 526 may be directly driven by the power turbine 534 and remain within the contemplation and scope of this application.

The example propulsor mount assembly 564 includes a forward portion 566 attached to the power turbine case 535 at a forward location 572 and an aft portion 568 attached to the power turbine case 535 at an aft location 574. A thrust link 570 is attached to the pylon 560 and the power turbine case 535 at or near the forward location 572.

The example core engine mount assembly 590 includes a forward mount 592 attached to an engine case 525 at a forward location 598, an aft mount 594 attached at an aft location 600 of the engine case 525, and a thrust link 596. The thrust link 596 extends from a location at or near the aft location 600 to the aircraft structure. The engine case 525 may be one part or multiple parts attached to each other to support components of the core engine section 524.

The loads generated by the propulsor section 522 are isolated from the core engine section 524 due to the separate load paths provided by the separate mount assemblies 564, 590. The transition duct 540 is a compliant structure that does not transmit loads between the core engine section 524 and the propulsor section 522. The example transition duct 540 is not a structural component and does not bear loads of either the propulsor section 522 or the core engine section 524.

In one disclosed embodiment, the mount assemblies 564 and 590 are supported on a pylon 560 extending from a wing 562 of the aircraft. However, other mounting locations on an aircraft structure could be utilized and are within the contemplation of this disclosures.

Accordingly, the disclosed propulsion system includes mount assemblies that enables core engine configurations with improved operational efficiency by isolating loads generated by a propulsor section from being transmitted through the core engine section.

Although an example embodiment has been disclosed, a worker of ordinary skill in this art would recognize that certain modifications would come within the scope of this disclosure. For that reason, the following claims should be studied to determine the scope and content of this disclosure.

## Claims

1. An aircraft propulsion system (20;120;320;420;520) comprising:
a propulsor section (22;222;322;422;522) comprising a fan (26;326;426;526) rotatable about a fan axis (A);
a core engine section (24;124;324;424;524) configured to generate an exhaust gas flow (58) that is expanded through a turbine (34;434;534) to drive a shaft (32;432;532) for driving the fan (26...526); and
a propulsor mount assembly (64;364;464;564) attached to the propulsor section (22...522) and configured to support the propulsor section (22...522) on an aircraft structure and isolate loads generated in the propulsor section (22...522) from the core engine section (24...524).

2. The aircraft propulsion system (20...520) of claim 1, wherein the turbine (34) comprises a power turbine (34) mechanically uncoupled from the core engine (24) and configured to drive the fan (26) about the fan axis (A) through a power turbine shaft (36).

3. The aircraft propulsion system (20) of claim 2, further comprising a structural transition duct (40) where the exhaust gas flow (58) from the core engine (24) is communicated to the power turbine (34), the structural transition duct (40) is supported by the propulsor mount assembly (64) and the core engine (24) is attached to the structural transition duct (40).

4. The aircraft propulsion system (20) of claim 3, wherein the propulsor mount assembly (64) comprises a forward portion (66) attached to the propulsor section (22), an aft portion (68) attached to the structural transition duct (40), and a thrust link (70) attached to the propulsor section (22).

5. The aircraft propulsion system (420;520) of claim 1 or 2, further comprising a compliant transition duct (440;540) disposed between the propulsor section (422;522) and the core engine section (424;524), and a core engine mount assembly (490;590) attached to the core engine section (424;524) and configured to support loads of the core engine (424;524) separate from the propulsor section (422;522).

6. The aircraft propulsion system (420;520) of claim 5, wherein a propulsor mount section (464;564) comprises a forward portion (466;566) attached to a forward location (472;572) of the propulsor section (422;522), an aft portion (468;568) attached to an aft location (474;574) of the propulsor section (422;522), and a thrust link (470;570) attached near the forward location (472;572).

7. The aircraft propulsion system (420;520) of claim 5 or 6, wherein the core engine section (424;524) comprises a reverse core engine with a turbine section (46;446;546) disposed forward of compressor section (42;442;542) and the core engine mount assembly (490;590) comprises a forward mount (492;592), an aft mount (494;594) and an engine thrust link (496;596) extending from a forward location of the aircraft structure to an aft portion (500;600) of an engine case (425;525) of the core engine (424;524).

8. The aircraft propulsion system (420;520) of any of claims 5 to 7, wherein the compliant transition duct (440;540) is configured to prevent transmission of loads between the propulsor section and the core engine section (24).

9. The aircraft propulsion system (20...520) of any preceding claim, wherein the fan (26;426;526) comprises an open rotor fan assembly.

10. The aircraft propulsion system (220) of any of claims 1 to 8, wherein the propulsor section (222) includes a fan duct (78) and the fan (80) rotates within the fan duct (78).

11. The aircraft propulsion system (120;520) of any preceding claim, wherein the core engine section (124;524) is disposed about an engine axis (B) and the engine axis (B) is disposed at an angle (106;602) relative to the fan axis (A).

12. The aircraft propulsion system (20...520) of any preceding claim, wherein the core engine (24) is removable from the aircraft structure independent of the propulsor section (22).

13. The aircraft propulsion system (320) of any preceding claim, wherein the propulsor section (322) includes a structural case (340), the core engine section (324) is supported by the structural case (340) and a turbine section (46) is a part of the core engine section (324).

14. The aircraft propulsion system (20...520) of any preceding claim, wherein the core engine section (24) is mounted to an aft portion of the propulsor section (22).

15. A method of mounting an aircraft propulsion system (20...520) comprising:
mounting a propulsor section (22...522) comprising a fan (26...526) rotatable about a fan axis (A) with a propulsor mount assembly (64...564), wherein the propulsor mount assembly (64...564) supports the propulsor section (22...522) independent of a core engine section (24...524);
mounting a core engine section (24...524) configured to generate an exhaust gas flow (58) relative to the propulsor section (22...524); and
isolating loads generated in the propulsor section (22...522) from the core engine section (24...524) with the propulsor mount assembly (64...564),
optionally, wherein the method further comprises independently mounting the core engine section (24...524) and mounting a transition duct (40) between the propulsor section (22...522) and the core engine section (24...524) where the exhaust gas flow (58) from the core engine section (24...524) is communicated to a power turbine (34...534) that drives the fan (26...526) independent of rotating elements of the core engine section (24...524).
